# EUROPEAN PATENT APPLICATION

(11) **EP 4 303 525 A1**
(43) Date of publication of application: **10.01.2024**
(21) Application number: 22275089.5
(22) Date of filing: 07.07.2022
(51) Int. Cl.: F41A 27/08, B64D 7/06, B64C 39/02, B64C 39/04

(54) **DRONE OPERABLE FOR FLIGHT**

(71) Applicant: BAE SYSTEMS plc, London SW1Y 5AD (GB)
(72) Inventor: The designation of the inventor has not yet been filed
(74) Representative: BAE SYSTEMS plc Group IP Department

(57) **Abstract**

A drone (10) operable for flight. The drone has a fuselage (100) having a length (L) extending along an x-axis, the fuselage (100) comprising a port side fuselage section (102) spaced apart from a starboard side fuselage section (104) to define a slot (106) therebetween which extends along the length (L) of the fuselage (100). There is also provided a cannon (200) having a barrel (202). The cannon (200) is pivotably mounted in the slot (106) to the port side fuselage section (102), and/or pivotably mounted to the starboard side fuselage section (104), by a trunnion mounting assembly (110) having a trunnion axis (112) which extends at right angles to the x-axis. The barrel (202) is operable to pivot about the trunnion axis (112) to move over, and/or be positioned at, a range of angles relative to the x-axis direction.

## Description

### FIELD

The present disclosure relates to a drone operable for flight.

In particular the disclosure is concerned with a drone which carries a cannon.

### BACKGROUND

Conventional drones may be configured as helicopters or fixed wing aircraft. Improvements and reduction in costs in computers, sensors and high-capacity batteries has led to more stable quad copters entering the mass market.

Equipment may be added to the body of the drone. For example, cameras may be provided attached to the underside, top side, front, back and/or side edges of the drone body.

In applications in which a projectile firing weapon is required to be deployed by a drone, the weapon is attached in a similar way, held such that it is offset from the core of the drone. Recoil from the weapon poses significant problems for the stability of the drone - for example causing it to tip due to leverage of the weapon around the centre of mass of the drone body. The mounting of a weapon in such a way also limits the targeting range, since the body of the drone limits the angle through which the weapon can pivot.

Hence a drone operable for flight which includes a projectile firing weapon, which is configured to reduce the effect of recoil on stability, and enables a large targeting range compared to examples of the related art, is highly desirable.

### SUMMARY

According to the present disclosure there is provided an apparatus and method as set forth in the appended claims. Other features of the invention will be apparent from the dependent claims, and the description which follows.

Accordingly there may be provided a drone (10) operable for flight comprising a fuselage (100) having a length (L) extending along an x-axis, the fuselage (100) comprising a port side fuselage section (102) spaced apart from a starboard side fuselage section (104) to define a slot (106) therebetween which extends along the length (L) of the fuselage (100). The drone (10) may further comprise a cannon (200) having a barrel (202), and the cannon (200) being pivotably mounted in the slot (106) to the port side fuselage section (102), and/or pivotably mounted to the starboard side fuselage section (104), by a trunnion mounting assembly (110) having a trunnion axis (112) which extends at right angles to the x-axis, such that the barrel (202) is operable to pivot about the trunnion axis (112) to move over, and/or be positioned at, a range of angles relative to the x-axis direction.

A first end (140) of the fuselage (100) and a second end (142) of the fuselage (100) may be spaced apart from one another along the length (L) of the fuselage (100) along the x-axis; the fuselage (100) extending along a y-axis, the port side of the fuselage (100) and the starboard side of the fuselage (100) spaced apart from one another across the width (W) of the fuselage (100) along the y-axis; the y-axis being at right angles to the x-axis, the trunnion axis (112) being aligned with and/or parallel to the y-axis; the fuselage (100) extending along a z-axis, a crown (120) of the fuselage and a bottom (122) of the fuselage spaced apart from one another along a depth (D) of the fuselage (100) along the z-axis, the z-axis being at right angles to the x-axis and y-axis; and the fuselage (100) defines the slot (106) extending along the x-axis and extending between the crown (120) and bottom (122). The barrel (202) may have a barrel axis (224), and the barrel (202) may have a front end (210) and a muzzle (212) provided towards the front end (210). The barrel axis (224) may be operable to be angled to either side of the x-axis to direct the muzzle (212) to a region above the crown (120) and to a region beneath the bottom (122).

The barrel (202) may be constrained to pivot in a plane of movement extending through the x-axis and z-axis.

The barrel axis (224) may intersect with the trunnion axis (112).

The cannon (200) may be operable to generate a recoil force with a recoil vector from the firing of a projectile from the gun barrel (202), and the cannon (200) may be mounted such that the recoil vector passes through the centre of mass of the drone (10).

The trunnion axis (112) may extend in the slot (106) between the port side fuselage section (102) and the starboard side fuselage section (104).

The interface between the trunnion mounting assembly (110) and the cannon (200) may be located in the slot (106).

The trunnion mounting assembly (110) may comprise a trunnion which extends along the trunnion axis (112) from the port side fuselage section (102) and/or the starboard side fuselage section (104), or extends along the trunnion axis (112) from the cannon (200).

The cannon (200) may have a calibre in the range of 12.7mm to 40mm.

The cannon (200) may have a calibre in the range of 20mm to 40mm.

The port side fuselage section (102) and the starboard side fuselage section (104) may be joined by a bracing member (130).

The trunnion mounting assembly (110) may comprise an actuator (132) to control the angle of the barrel axis (224) relative to the x-axis.

A drone (10) according to the present disclosure may further comprise a control unit (146) operable to control the actuator (132) to control the angle of the barrel axis (224) relative to the x-axis and the orientation of the drone (10).

A drone (10) according to the present disclosure may further comprise rotors (134) operable to generate thrust to lift the drone (10).

There may also be provided a method of operation of a drone (10), the drone comprising: a fuselage (100) having a length (L) extending along an x-axis, the fuselage (100) comprising a port side fuselage section (102) spaced apart from a starboard side fuselage section (104) to define a slot (106) therebetween which extends along the length (L) of the fuselage (100); a cannon (200) having a barrel (202), and the cannon (200) being pivotably mounted in the slot (106) to the port side fuselage section (102), and/or mounted to the starboard side fuselage section (104), by a trunnion mounting assembly (110) having a trunnion axis (112) which extends at right angles to the x-axis, such that the barrel (202) is operable to pivot about the trunnion axis (112) to move over and/or be positioned at, a range of angles relative to the x-axis direction; the method comprising the steps of: receiving input from a user to operate the cannon (200); and aiming the barrel (202) in a desired direction by one or more of: pivoting the barrel (202) about the trunnion axis (112); rotating the drone (10) about the x-axis; rotating the drone (10) about the y-axis; and rotating the drone (10) about the z-axis.

Hence there is provided a drone operable for flight which includes a projectile firing weapon, which is configured to reduce the effect of recoil on stability. This is achieved by the cannon being centrally mounted such that its recoil vector passes through the drone's centre of mass.

### BRIEF DESCRIPTION OF THE FIGURES

Embodiments of the invention will now be described by way of example only with reference to the figures, in which:
Figure 1 shows a plan view of a drone according to the present disclosure; and
Figure 2 shows a perspective view of a drone according to the present disclosure.

### DETAILED DESCRIPTION

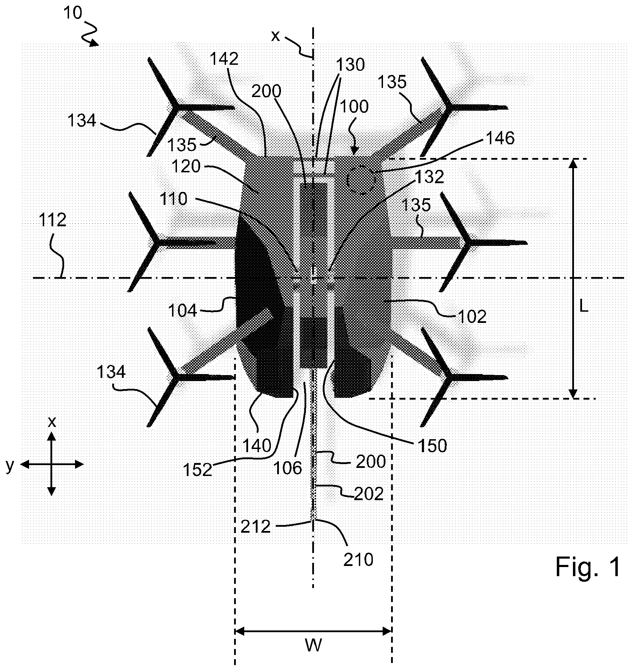

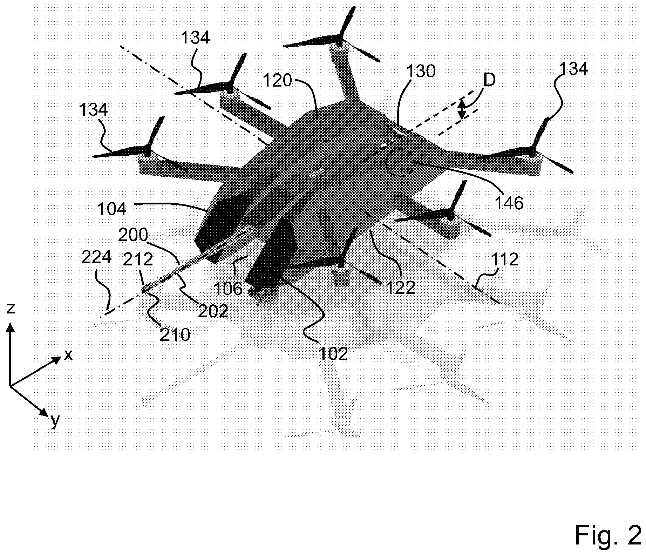

The present disclosure relates to a drone 10 operable for flight and a method of operation of a drone 10 operable for flight. An example of a drone according to the present disclosure is shown in figures 1, 2.

As shown in the figures, the drone 10 may comprise a fuselage 100 having a length L extending along an x-axis. A first end 140 of the fuselage 100 and a second end 142 of the fuselage 100 are spaced apart from one another along the length L of the fuselage 100 along the x-axis. The fuselage 100 also extends along a y-axis, the port side of the fuselage 100 and the starboard side of the fuselage 100 spaced apart from one another across the width W of the fuselage 100 along the y-axis. The y-axis is at right angles to the x-axis.

The fuselage 100 also extends along a z-axis, a crown 120 of the fuselage and a bottom 122 of the fuselage spaced apart from one another along a depth D of the fuselage 100 along the z-axis, the z-axis being at right angles to the x-axis and y-axis.

As best shown in figure 1, the fuselage 100 defines a slot 106 extending along the x-axis. The slot 106 extends between the crown 120 and bottom 122. The slot 106 extends between the crown 120 and bottom 122 of the fuselage along the length L of the fuselage. Hence the fuselage 100 comprises a port side fuselage section 102 spaced apart from a starboard side fuselage section 104 to define the slot 106 therebetween which extends along the length L of the fuselage 100. The port side fuselage section 102 may define a port side slot defining wall 150 and the starboard side fuselage section 104 may define a starboard side slot defining wall 152. The port side slot defining wall 150 and starboard side slot defining wall 152 face each other and are spaced apart to define the slot 106. The port side fuselage section 102 and the starboard side fuselage section 104 may be joined by a bracing member 130. The bracing member 130 may extend between the port side fuselage section 102 and the starboard side fuselage section 104. The bracing member 130 may extend from the port side slot defining wall 150 to the starboard side slot defining wall 152.

Hence the regions above and beneath the slot 106 may be unobstructed. Put another way, no feature of the fuselage section 102, 104 extend from the crown 120 or bottom 122 across the slot 106. That is to say, the port side fuselage section 102 and the starboard side fuselage section 104 may be joined, spaced apart from one another and configured such that no part of the drone extends over the region above the slot 106 and no part of the drone extends under the region beneath the slot 106.

The port side fuselage section 102 and/or starboard side fuselage section 104 may be assemblies of additional fuselage sub-sections.

The drone 10 may further comprise rotors 134 operable to generate thrust to lift the drone 10. For example, rotor mounts 135 (which each carry/support a rotor 134) may extend from the port side fuselage section 102 and starboard side fuselage section 104.

The drone 10 may further comprise a cannon 200 having a barrel 202. The barrel 202 has a barrel axis 224, and the barrel 202 has a front end 210 and a muzzle 212 provided towards the front end 210.

The cannon 200 may have a calibre in the range of 12.7mm to 120mm. The cannon 200 may have a calibre in the range of 20mm to 40mm. In particular the cannon 200 may have a calibre in the range of 12.7mm to 40mm. The cannon 200 may have a calibre in the range of 20mm to 30mm. Hence the cannon 200 of drone 10 may be of an artillery class of weapon.

The cannon 200 may be pivotably mounted in the slot 106 to the port side fuselage section 102. Alternatively or additionally the cannon 200 may be pivotably mounted to the starboard side fuselage section 104. That is to say, the cannon 200 is mounted between the port side fuselage section 102 and the starboard side fuselage section 104.

The barrel axis 224 is operable to be angled to either side of the x-axis to direct the muzzle 212 to a region above the crown 120 and to direct the muzzle 212 to a region beneath the bottom 122.

The cannon 200 may be pivotably mounted to the port side fuselage section 102 and/or pivotably mounted to the starboard side fuselage section 104 by a trunnion mounting assembly 110. The trunnion mounting assembly 110 may comprise a trunnion having a trunnion axis 112 (i.e. a pivot axis) which extends at right angles to the x-axis. Put another way, the trunnion axis 112 is aligned with and/or parallel with the y-axis. The trunnion may extend along the trunnion axis 112 from the port side fuselage section 102 and/or the starboard side fuselage section 104. The trunnion may extend along the trunnion axis 112 from the cannon 200.

The trunnion axis 112 extends in the slot 106 between the port side fuselage section 102 and the starboard side fuselage section 104. The interface between the trunnion mounting assembly 110 and the cannon 200 may be located in the slot 106.

The barrel axis 224 may intersect with the trunnion axis 112. That is to say, the barrel axis 224 of the cannon 200 intersects the trunnion axis 112 rather than extending over or extending underneath the trunnion axis 112. That is to say, the barrel axis 224 of the cannon 200 intersects the trunnion axis 112 so that the cannon 200 is centred on the trunnion axis 112. Thus the barrel axis 224 is not offset from the trunnion axis 112.

The point of intersection where the barrel axis 224 meets the trunnion axis 112 may coincide with the centre of mass of the drone 10. The point of intersection where the barrel axis 224 meets the trunnion axis 112 may coincide with the centre of mass of the drone along the trunnion axis 112. That is to say, the mass and distribution of mass of each fuselage section 102, 104 is such that the point of intersection where the barrel axis 224 meets the trunnion axis 112 may coincide with the centre of mass of the drone and/or may coincide with the centre of mass of the drone along the trunnion axis 112. The significance of this is that when the cannon fires, there is no torque or leverage around the centre of mass, and hence the drone will not tip (for example will not rotate about the y-axis) in response to the firing of a projectile. Hence firing of a projectile may cause the drone to be displaced in a direction opposite to the direction in which the projectile was fired, but will not rotate the drone about the x, y or z axes.

Since the cannon 200 is mounted to the fuselage by a trunnion mounting assembly 110 having a trunnion axis 112 aligned with and/or parallel with the y-axis, the barrel 202 is operable to pivot about the trunnion axis 112 to move over, and/or be positioned at, a range of angles relative to the x-axis direction.

That is to say, barrel 202 may be mounted to the fuselage 100 by a trunnion mount (i.e. a pivot mount) 110 having a pivot axis 112 which extends at right angles to the x-axis and is aligned with and/or parallel with the y-axis.

The barrel 202 may be constrained to pivot in a plane of movement extending through the x-axis and z-axis. That is to say, the barrel 202 may be constrained to pivot about the trunnion axis 112 in a plane of movement extending through the x-axis and z-axis.

The barrel 202 may be constrained to pivot about the trunnion axis 112 between up to 90 degrees below the x-axis and up to 90 degrees above the x-axis. That is to say, the barrel 202 is constrained to pivot about the trunnion axis 112 between up to -90 degrees relative to the x-axis (i.e. pointing downwards) and up to +90 degrees relative to the x-axis (i.e. pointing upwards).

The barrel 202 may be constrained to pivot about the trunnion axis 112 between -60 degrees relative to the x-axis (i.e. pointing downwards) and +60 degrees relative to the x-axis (i.e. pointing upwards).

The barrel 202 may be constrained to pivot about the trunnion axis 112 between -30 degrees relative to the x-axis (i.e. pointing downwards) and +30 degrees relative to the x-axis (i.e. pointing upwards).

The barrel 202 may constrained to pivot up to 180 degrees about the trunnion axis 112. The barrel 202 may constrained to pivot up to 250 degree about the trunnion axis 112.

The cannon 200 may be operable to generate a recoil force with a recoil vector from the firing of a projectile from the gun barrel 202, and (as described above) the cannon 200 is mounted such that the recoil vector passes through the centre of mass of the drone 10.

The trunnion mounting assembly 110 may comprise an actuator 132 to control the angle of the barrel axis 224 relative to the x-axis. That is to say, the trunnion mounting assembly 110 may comprise an actuator 132 to control the angle of the cannon barrel axis 224 relative to the x-axis.

The drone 10 may further comprise a control unit 146 operable to control the actuator 132 to control the angle of the barrel axis 224 relative to the x-axis and the orientation of the drone 10.

The drone 10 may be provided with a sensor, an array of sensors and/or a camera to generate situational awareness data for control of the drone. For example this may be fed back to a user operating the drone, or may be processed by the control unit 146 for autonomous flight control of the drone 10.

The drone 10 may also be provided with a communication system for sending and/or receiving data from other units (for example other drones) to co-ordinate paths and missions.

The drone 10 may further comprise a secondary gun barrel located in parallel (for example above or below) the cannon 200. The secondary barrel may be of smaller calibre than the cannon (for example less than 12.7mm e.g. a machine gun.)

The drone 10 may further comprise a recoil mitigation system which uses features of the cannon and thrust from the drone flight system to resist / reduce displacement of the drone during firing of the cannon. For example, the rotors may be configured and/or operated to reduce displacement of the drone during recoil, for example by increasing thrust when the cannon is fired and/or accelerating prior to firing and/or then deactivating/decelerating the rotors to reduce their loading during firing. The drone 10 may comprise air brakes which are operable to reduce displacement of the drone during recoil. The drone may also comprise mobile surfaces which are controllable and operable to reduce displacement of the drone during recoil. Additionally the exhaust gas generated by the cannon may be utilised (e.g. directed) to counter the recoil force generated when the cannon if fired.

The unladen mass of the drone may be no greater than 10,000kg. The unladen mass of the drone may be no greater than 1,000kg. The unladen mass of the drone may be no greater than 500kg. The unladen mass of the drone may be no greater than 200kg.

There may also be provided a method of operation of the drone 10, wherein the method comprises receiving input from a user to operate the cannon 200. The drone 10 may be operable to fly and/or hover autonomously.

Additionally or alternatively, the method of operation may comprise the step of aiming the barrel 202 in a desired direction by one or more of pivoting the barrel 202 about the trunnion axis 112, rotating the drone 10 about the x-axis, rotating the drone 10 about the y-axis; and/or rotating the drone 10 about the z-axis.

Additionally or alternatively, the method of operation may comprise the step of aiming the barrel 202 in a desired direction by operating the drone 10 to remain at a fixed GPS co-ordinate, at a fixed altitude and fly in a substantially circular flight path.

Additionally or alternatively, the method of operation may include receiving control information from a user or master controller for flight operations.

The system and method of the present disclosure provides a platform for deploying, aiming and firing a medium calibre cannon with significant advantages over examples of the related art.

The cannon is centrally mounted such that its recoil vector passes through the drone's centre of mass. This configuration reduces the tendency of the cannon to cause uncontrolled pitching of the drone when its cannon is fired, regardless of what angle the cannon is relative to the x-axis.

The configuration of the drone also allows for the provision of recoil mitigation systems, as herein described, to reduce recoiling distance in response to firing of the cannon.

The configuration of the barrel 202 being operable to pivot about the trunnion axis 112 to move over, and/or be positioned at, a range of angles relative to the x-axis direction (i.e. the barrel being moveable/pivotable about a single axis) simplifies the connection of the cannon to an ammunition handling system, which will be required for extended operation.

The way in which the cannon is mounted means that it is able to pitch up and down to enable it to fire in front, below and above the body of the drone. Since the drone is operable to rotate in flight around its z-axis, this means the cannon is operable to aim in any direction.

The fuselage sections, which may be configured to carry electronics, batteries, sensors, ammunition and other equipment, allow for the drone's mass to be distributed either side of centrally mounted cannon, thereby increasing stability of the system during flight and cannon firing.

The configuration of the mounting assembly, fuselage sections and cannon relative to each other also means the weight of the drone may be minimised, leading to a relatively light weight solution, enabling it to have greater agility and flight time than heavier systems.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A drone operable for flight comprising:
a fuselage having a length (L) extending along an x-axis, the fuselage comprising a port side fuselage section spaced apart from a starboard side fuselage section to define a slot therebetween which extends along the length (L) of the fuselage;
a cannon having a barrel, and the cannon being pivotably mounted in the slot to the port side fuselage section, and/or pivotably mounted to the starboard side fuselage section, by a trunnion mounting assembly having a trunnion axis which extends at right angles to the x-axis, such that the barrel is operable to pivot about the trunnion axis to move over, and/or be positioned at, a range of angles relative to the x-axis direction.

2. A drone as claimed in claim 1 wherein a first end of the fuselage and a second end of the fuselage are spaced apart from one another along the length (L) of the fuselage along the x-axis; the fuselage extending along a y-axis, the port side of the fuselage and the starboard side of the fuselage spaced apart from one another across the width (W) of the fuselage along the y-axis; the y-axis being at right angles to the x-axis, the trunnion axis being aligned with and/or parallel to the y-axis; the fuselage extending along a z-axis, a crown of the fuselage and a bottom of the fuselage spaced apart from one another along a depth (D) of the fuselage along the z-axis, the z-axis being at right angles to the x-axis and y-axis; and the fuselage defines the slot extending along the x-axis and extending between the crown and bottom; and
the barrel has a barrel axis, and the barrel has a front end and a muzzle provided towards the front end;
wherein the barrel axis is operable to be angled to either side of the x-axis to direct the muzzle to a region above the crown and to a region beneath the bottom.

3. A drone as claimed in claim 2 wherein the barrel is constrained to pivot in a plane of movement extending through the x-axis and z-axis.

4. A drone as claimed in claim 2 or claim 3 wherein the barrel axis intersects with the trunnion axis.

5. A drone as claimed in any one of the preceding claims wherein the cannon is operable to generate a recoil force with a recoil vector from the firing of a projectile from the gun barrel, and the cannon is mounted such that the recoil vector passes through the centre of mass of the drone.

6. A drone as claimed in any one of the preceding claims wherein the trunnion axis extends in the slot between the port side fuselage section and the starboard side fuselage section.

7. A drone as claimed in any one of the preceding claims wherein the interface between the trunnion mounting assembly and the cannon is located in the slot.

8. A drone as claimed in any one of the preceding claims wherein the trunnion mounting assembly comprises a trunnion which extends along the trunnion axis from the port side fuselage section and/or the starboard side fuselage section, or extends along the trunnion axis from the cannon.

9. A drone as claimed in any one of the preceding claims wherein the cannon has a calibre in the range of 12.7mm to 40mm.

10. A drone as claimed in claim 9 wherein the cannon has a calibre in the range of 20mm to 40mm.

11. A drone as claimed in any one of the preceding claims wherein the port side fuselage section and the starboard side fuselage section are joined by a bracing member.

12. A drone as claimed in any one of the preceding claims wherein the trunnion mounting assembly comprises an actuator to control the angle of the barrel axis relative to the x-axis.

13. A drone as claimed in claim 12 further comprising a control unit operable to control the actuator to control the angle of the barrel axis relative to the x-axis and the orientation of the drone.

14. A drone as claimed in any one of the preceding claims further comprising rotors operable to generate thrust to lift the drone.

15. A method of operation of a drone, the drone comprising:
a fuselage having a length (L) extending along an x-axis, the fuselage comprising a port side fuselage section spaced apart from a starboard side fuselage section to define a slot therebetween which extends along the length (L) of the fuselage;
a cannon having a barrel, and the cannon being pivotably mounted in the slot to the port side fuselage section, and/or mounted to the starboard side fuselage section, by a trunnion mounting assembly having a trunnion axis which extends at right angles to the x-axis, such that the barrel is operable to pivot about the trunnion axis to move over and/or be positioned at, a range of angles relative to the x-axis direction;
the method comprising the steps of:
receiving input from a user to operate the cannon; and
aiming the barrel in a desired direction by one or more of:
pivoting the barrel about the trunnion axis;
rotating the drone about the x-axis;
rotating the drone about the y-axis; and
rotating the drone about the z-axis.
